# EUROPÄISCHE PATENTANMELDUNG

(11) **EP 2 522 494 A2**
(43) Veröffentlichungstag der Anmeldung: **14.11.2012**
(21) Anmeldenummer: 12167322.2
(22) Anmeldetag: 09.05.2012
(51) Int. Cl.: B29C 70/02, B29C 70/08, B29C 70/44

(54) **Verfahren zur Herstellung von Hybridbauteilen aus faserverstärktem Kunststoff mit integriertem metallischem Formwerkzeug**

(30) Priorität: 12.05.2011 DE 102011050304
(71) Anmelder: Deutsches Zentrum für Luft- und Raumfahrt e.V., 51147 Köln (DE)
(72) Erfinder: Stefaniak, Daniel, 31224 Peine (DE); Hühne, Dr. Christian, 30173 Hannover (DE); Kolesnikov, Dr. Boris, 38104 Braunschweig (DE); Wolff, Johannes, 38102 Braunschweig (DE); Kappel, Erik, 30900 Wedemark (DE); Fink, Dr. Axel, 86609 Donauwörth (DE); Hindersmann, Arne, 38100 Braunschweig (DE)
(74) Vertreter: Rehberg Hüppe + Partner

(57) **Zusammenfassung**

Bei einem Verfahren zur Herstellung von Hybridbauteilen (1) aus Kunststoff (3) mit Einlagen aus Verstärkungsfasern (16) und mindestens einem Metallkörper (2) wird eine zumindest die Verstärkungsfasern (16) und den Metallkörper (2) umfassende Vorform luftdicht in einer Umhüllung (18) eingeschlossen. Die Umhüllung (18) wird evakuiert. Die Verstärkungsfasern (16) werden mit dem Kunststoff (3) infiltriert. Der Kunststoff (3) wird unter Anbindung an den Metallkörper (2) ausgehärtet, wobei die Raumform des Hybridbauteils (1) mit formgebenden Oberflächen (17) bestimmt wird, die mindestens eine formsteife Oberfläche (17) des mindestens einen Metallkörpers (2) umfassen. Die die Vorform einschließende luftdichte Umhüllung (18) weist allseitig eine innere luftleitende Schicht (4) und eine äußere Vakuumfolie (5) auf.

## Beschreibung

### TECHNISCHES GEBIET DER ERFINDUNG

Die Erfindung bezieht sich auf ein Verfahren zur Herstellung von Hybridbauteilen aus Kunststoff mit Einlagen aus Verstärkungsfasern und mindestens einem Metallkörper, das die Merkmale des Oberbegriffs des unabhängigen Patentanspruchs 1 aufweist.

Hybridbauteile sind spezielle Faserverbundbauteile, deren Verbund neben Verstärkungsfasern auch einen Metallkörper eingebettet in eine Matrix aus einem Kunststoff aufweist.

Statt des hier gewählten Begriffs Kunststoff wird bei Faserverbundbauteilen häufig auch eine der Bezeichnungen Kunststoffmatrix oder Harz oder Harzmatrix verwendet. Dabei findet die Bezeichnung Harz insbesondere dann Verwendung, wenn der Kunststoff noch nicht ausgehärtet ist. Sämtliche Begriffe Kunststoff, Kunststoffmatrix, Harz und Harzmatrix bezeichnen aber grundsätzlich dasselbe.

### STAND DER TECHNIK

Die Herstellung von Faserverbundbauteilen erfolgt in der Regel entweder in einem kontinuierlichen Pultrusionsprozess oder in Formwerkzeugen. Für komplexe Bauteilgeometrien, für Prozesse, bei denen das Aushärten des Kunststoffs in einem Autoklaven erfolgt, und für die Ausbildung von Faserverbundbauteilen aus vorimprägnierten Fasermaterialien (Prepregs) werden einseitige oder allseitige Formwerkzeuge verwendet. Die formgebenden Oberflächen der Formwerkzeuge bestimmen dabei die Raumform der hergestellten Faserverbundbauteile beim Aushärten des Kunststoffs. Zuvor dienen sie vielfach als Unterlage für die trocknen oder vorimprägnierten Fasermaterialien.

Abhängig von der Anwendung werden Formwerkzeuge aus Aluminium, Stahl, Keramik, Silikon, Nickel, Invar, Kohlenstoffschaum oder Kohlenstofffaser-verstärktem Kunststoff (CFK) eingesetzt. Für die Herstellung komplexer Bauteile mit Hinterschneidungen bzw. Hohlräumen werden mehrteilige Formwerkzeuge oder zusätzliche Formkerne verwendet. Zur Vereinfachung des Werkzeugaufbaus und der Entformung können flexible Schläuche mit einer Füllung aus Sand, flüssigem oder gasförmigem Medium als Formkerne Verwendung finden.

Die US 2008/0202680 A1 beschreibt ein Verfahren zur Herstellung verstärkter Strukturen aus Verbundmaterialien mit einer äußeren Schale und einer Mehrzahl von Verstärkungselementen, die gegenüber der Schale einen im Querschnitt geschlossenen Hohlraum begrenzen. Das bekannte Verfahren umfasst das Anordnen von Vorformen für die Versteifungselemente und die Schale in einem Formwerkzeug, wobei ein Formkern am Ort des Hohlraums angeordnet wird. Nach dem gemeinsamen Aushärten der Vorformen zu der verstärkten Struktur wird das Volumen des Formkerns reduziert, und der Formkern wird aus der verstärkten Struktur entfernt. Das hierfür benötigte Formwerkzeug ist aufwändig, und zwar sowohl was seinen äußeren starren Teil als auch seinen im Volumen reduzierbaren Formkern anbelangt.

Die DE 10 2008 036 349 A1 offenbart eine Vorrichtung und ein Verfahren zur Herstellung einer Struktur aus Faserverbundwerkstoff, mit einem Formwerkzeug zur Aufnahme von Material, das zu einer Struktur fügbar ist, und einem Vakuumaufbau zum Formen und Fixieren der Struktur. Der Vakuumaufbau weist eine flexible Schicht, insbesondere eine Trennfolie oder Trennschicht und/oder Abreißfolie, und eine Vakuumfolie zum Bedecken der Struktur auf. Der Vakuumaufbau ist zumindest in einem Abschnitt frei von Belüftungsmaterial und/oder Abreißmaterial, welcher mit einem Abschnitt der zu bedeckenden Struktur korrespondiert, in dem sich ein Absatz erstreckt. Kein Teil des die Struktur formenden Vakuumaufbaus wird anschließend Teil der Struktur.

Hybridbauteile werden eingesetzt, um die positiven Eigenschaften sowohl von faserverstärktem Kunststoff als auch von Metall optimal auszunutzen. Hierdurch können Eigenschaften wie Steifigkeit, Festigkeit, Ermüdungsfestigkeit und Schadenstoleranz in weiterem Umfang eingestellt werden als bei Bauteilen nur aus Faserverbundwerkstoff oder Metall. Bei bekannten Hybridbauteilen werden Aluminiumbleche zum Beispiel mit Aramid- und/oder Glasfasern verstärkt, um die Ermüdungseigenschaften und die Schadenstoleranz der Bauteile zu verbessern. Abhängig vom Anforderungsprofil werden auch andere Blechmaterialien, wie Stahl, Titan und verschiedene Leichtmetalllegierungen für den Metallkörper eingesetzt. Diese können mit Verstärkungsfasern auch Glas, Aramid, Kohlenstoff, Bor, PBO oder UH-MWPE kombiniert werden.

Verfahren zur Herstellung von Hybridbauteilen mit geschlossenen metallischen Oberflächen sind aus der WO 2008/054876 A2 bekannt. Konkret handelt es sich bei den Hybridbauteilen um Flugzeugflügelstrukturen. Nach einem Verfahren wird eine Vorform für das Hybridbauteil schichtweise auf einem einseitigen Formwerkzeug abgelegt. Dieser Schichtaufbau wird mit einem Vakuumsack abgeschlossen, und dann erfolgt die Aushärtung in einem Autoklaven. Alternativ erfolgt die Aushärtung in einem allseitig geschlossenen Formwerkzeug. Weiterhin wird ein Verfahren beschrieben, bei dem eine unterste Schicht des Hybridbauteils von einem spanabnehmend oder spanlos geformten Metallkörper gebildet wird, der als Formwerkzeug für die darauf aufgelegten weiteren Schichten verwendet wird. Dann wird die ganze Schichtstruktur zusammen ausgehärtet. Dieses Aushärten kann unter einem Vakuumsack in einem Autoklaven oder unter Verwendung eines zusätzlichen die Raumform des Hybridbauteils definierenden Formwerkzeugs erfolgen.

Bei allen Formwerkzeugen für Faserverbundwerkstoffe treten verschiedene problematische Aspekte auf.

So weisen Faserverbundwerkstoffe ein anisotropes Wärmedehnungsverhalten auf. Vor allem in der Hauptrichtung des Verlaufs der Verstärkungsfasern, d. h. der höchsten Steifigkeit der Faserverbundwerkstoffe, ist ihre Wärmeausdehnung nur sehr gering. Insbesondere weist Kohlenstofffaser-verstärkter Kunststoff (CFK) in Faserrichtung einen Wärmeausdehnungskoeffizienten auf, der denjenigen von gebräuchlichen metallischen Formwerkstoffen, wie Stahl und Aluminium, extrem unterschreitet. Die Geometrie eines Formwerkzeugs muss bei der Aushärtetemperatur des Kunststoffs mit der gewünschten Endgeometrie des Faserverbundbauteils unter Berücksichtigung der Bauteilausdehnung übereinstimmen. Dafür muss die Differenz der absoluten Wärmeausdehnung zwischen Faserverbundbauteil und Formwerkzeug unter Berücksichtigung von Einsatz- und Aushärtetemperatur im Formwerkzeug vorgehalten werden. Zusätzlich induzieren Form-Bauteil-Interaktionen, ausgelöst durch die Dehnungsinkompatibilität von Formwerkzeug und Faserverbundbauteil, Spannungen im Faserverbundbauteil, die Verwerfungen (warpage) hervorrufen.

Die Berücksichtung fertigungsinduzierter Einflüsse auf die Bauteilgeometrie erfordert bei Formwerkzeugen aus Aluminium oder Stahl sehr aufwändige Vorversuche und Berechnungen. Ein idealer Formwerkstoff weist in jeder Betrachtungsrichtung mit dem Faserverbundbauteil identische Wärmeausdehnungen auf. Aus diesem Grund werden oftmals Werkzeuge aus CFK verwendet, die jedoch eine deutlich geringere Anzahl an Abformungen erlauben als metallische Formwerkzeuge.

Alternativ werden Formwerkzeuge aus Invar (FeNi36) eingesetzt. Der niedrige Wärmeausdehnungskoeffizient von Invar ähnelt demjenigen der meisten CFK-Faserverbundwerkstoffe, jedoch sind die Werkstoff- und Bearbeitungskosten von Invar deutlich höher als bei anderen metallischen Werkstoffen für Formwerkzeuge.

Darüber hinaus spielen bei warmhärtenden Harzsystemen Wärmekapazität und Wärmeleitfähigkeit des Formwerkzeugs eine erhebliche Rolle. Die Wärmekapazität des Formwerkzeugs bestimmt maßgeblich die im Aufheizprozess zuzuführende Wärmeenergie und beeinflusst dadurch die Prozessdauer. Für ein an Eigenspannungen armes Faserverbundbauteil ist eine homogene Aushärtung notwendig, die nur durch eine homogene Wärmeverteilung in der Vorform des Faserverbundbauteils erreicht werden kann. Eine hohe Wärmekapazität des Formwerkzeugs begünstigt die Ausbildung eines unerwünschten thermischen Gradienten in der Vorform orthogonal zur Werkzeugoberfläche, während eine geringe Wärmeleitfähigkeit des Formwerkzeugs die Gefahr einer inhomogenen Wärmeverteilung in Bauteilebene fördert. Insbesondere Invar weist eine hohe spezifische Wärmekapazität auf, während CFK die geringste Wärmeleitfähigkeit der betrachteten Werkstoffe für Formwerkzeuge besitzt. Der hohen Wärmekapazität der Formwerkzeuge kann bekanntermaßen durch zwei Maßnahmen begegnet werden, der Konstruktion des Formwerkzeugs aus Sandwichstrukturen mit gegen die Umgebung isolierten Kernwerkstoffen und der Verwendung von Kohlenstoffschäumen als Werkzeugstruktur. Beides bedeutet einen besonders hohen Aufwand bei der Herstellung der Formwerkzeuge.

Die Großserienfertigung von Faserverbundbauteilen erfordert Formwerkzeuge, in denen viele identische Bauteile mit hoher Maßhaltigkeit gefertigt werden können. Dem steht die hohe Abrasivität von Faserverbundwerkstoffen grundsätzlich entgegen. Insbesondere CFK, aber auch Aluminium besitzen als Werkstoffe für Formwerkzeuge schlechte Verschleißeigenschaften und eignen sich daher nicht für den Großserieneinsatz. Formwerkzeuge aus Invar müssen für den Einsatz in Großserien zusätzlich mit einer stromlos erzeugten Nickelschicht überzogen werden, um ihre Verschleißeigenschaften zu verbessern.

Bei herkömmlichen Formwerkzeugen müssen Trennmittel auf die Werkzeugoberfläche aufgetragen werden, um eine Entformung des ausgehärteten Faserverbundbauteils bei minimalem Kraftaufwand zu gewährleisten. Sowohl bei verlorenen Trennmitteln, die sich bei der Fertigung eines einzelnen Faserverbundbauteils aufbrauchen, als auch bei semi-permanenten Trennmitteln gehen Bestandteile der Trennmittel in das Bauteil über. Die Auswirkungen von Trennmittelrückständen im Bauteil sind nicht vollständig übersehbar und erfordern vor allem bei Klebeverbindungen von Faserverbundbauteilen aufwändige experimentelle Untersuchungen. Des Weiteren geht von lösemittelhaltigen semi-permanenten Trennmitteln bei Anwendung und Transport eine gesundheitliche Gefährdung aus.

### AUFGABE DER ERFINDUNG

Der Erfindung liegt die Aufgabe zugrunde, ein Verfahren zur Herstellung von Faserverbundbauteilen aufzuzeigen, das entweder ganz ohne Formwerkzeuge auskommt oder nur geringe Anforderungen an eingesetzte Formwerkzeuge stellt.

### LÖSUNG

Die Aufgabe der Erfindung wird durch ein Verfahren mit den Merkmalen des unabhängigen Patentanspruchs 1 gelöst.

Bevorzugte Ausgestaltungen der Erfindung sind den abhängigen Patentansprüchen definiert.

### BESCHREIBUNG DER ERFINDUNG

Einem Verfahren zur Herstellung von Hybridbauteilen aus Kunststoff mit Einlagen aus Verstärkungsfasern und mindestens einem Metallkörper, wobei eine zumindest die Verstärkungsfasern und den Metallkörper umfassende Vorform luftdicht in eine Umhüllung eingeschlossen wird, wobei die Umhüllung evakuiert wird, wobei die Verstärkungsfasern mit dem Kunststoff infiltriert werden und wobei der Kunststoff unter Anbindung an den Metallkörper ausgehärtet wird, wobei die Raumform des Hybridbauteils mit formgebenden Oberflächen bestimmt wird, die mindestens eine formsteife Oberfläche des mindestens einen Metallkörpers umfassen, fügt die Erfindung das Merkmal hinzu, dass die die Vorform einschließende luftdichte Umhüllung allseitig eine innere luftleitende Schicht und eine äußere Vakuumfolie aufweist. Alles was sich innerhalb dieser luftdichten Umhüllung, konkret innerhalb deren luftleitenden Schicht befindet, ist Teil des hergestellten Hybridbauteils. Das heißt, alle formgebenden Oberflächen, mit denen der noch nicht ausgehärtete Kunststoff in Berührung kommt, sind solche des mindestens einen Metallkörpers, der Bestandteil des Hybridbauteils wird. Entsprechend muss kein Trennmittel eingesetzt werden, um den Kunststoff nach der Aushärtung von irgendwelchen formgebenden Oberflächen zu entformen. Die allseitige Umhüllung der Vorform mit einer inneren luftleitenden Schicht und einer äußeren Vakuumfolie erlaubt es dabei, die Vorform mit dem Umgebungsdruck allseitig an den formgebenden Metallkörper anzupressen.

Das neue Verfahren kann neben Hybridbauteilen aus Kunststoff mit genau einem Metallkörper auch zur Herstellung von Hybridbauteilen aus Kunststoff mit mehreren Metallkörpern angewendet werden. Dabei können die weiteren Metallkörper ebenfalls formsteife Oberflächen aufweisen, die als formgebende Oberflächen für die Raumform der Hybridbauteile genutzt werden. Dies muss aber nicht sein. Vorzugsweise ist bei den Hybridbauteilen zwischen mehreren Metallkörpern jeweils ein Bereich aus Kunststoff, noch mehr bevorzugt aus Kunststoff mit eingebetteten Verstärkungsfasern angeordnet.

Der mindestens eine Metallkörper wird bei der Ausbildung der Vorform im Rahmen des erfindungsgemäßen Verfahrens insbesondere allseitig mit Verstärkungsfasern belegt. Anders gesagt ist das neue Verfahren primär für die Herstellung solcher Hybridbauteile vorgesehen, bei denen kein Metallkörper eine äußere Oberfläche des Hybridbauteils ausbildet. Insofern unterscheidet sich ein nach dem erfindungsgemäßen Verfahren hergestelltes Faserverbundbauteil von vielen bekannten Hybridbauteilen, indem der Metallkörper im Wesentlichen ein integriertes, d. h. vollständig eingebettetes metallisches Formwerkzeug darstellt, das innerhalb des Faserverbundbauteils verbleibt.

An dieser Stelle ist festzuhalten, dass bei dem erfindungsgemäßen Verfahren die Verstärkungsfasern der Vorform sowohl trocken als auch vorimprägniert sein können. Das heißt, der Schritt des Infiltrierens der Verstärkungsfasern mit dem Kunststoff kann bei dem erfindungsgemäßen Verfahren teilweise oder ganz schon vor dem Ausbilden der Vorform durchgeführt werden. In jedem Fall erfolgt erst unter Einwirkung des die mit dem Kunststoff infiltrierten Fasern an den Metallkörper andrückenden Differenzdrucks über die luftdichte Umhüllung die Ausbildung der geschlossenen Matrix aus dem faserverstärkten Kunststoff und der gewünschten Raumform des Faserverbundbauteils unmittelbar vor der Aushärtung des Kunststoffs.

Zur Ausbildung der luftleitenden Schicht der luftdichten Umhüllung der Vorform, die für eine homogene Verteilung des Differenzdrucks über die Vakuumfolie erforderlich ist, kann bei dem erfindungsgemäßen Verfahren konkret Abreißgewebe verwendet werden, wie es bekanntermaßen unterhalb einer Vakuumfolie zum Einsatz kommen kann, und das eine definierte Entfernung der Vakuumfolie von dem fertigen Faserverbundbauteil ermöglicht. Typischerweise werden alle Oberflächen eines erfindungsgemäß hergestellten Faserverbundbauteils durch Abrissflächen von Abreißgewebe gebildet. Das heißt, sie weisen eine definierte Struktur und insbesondere auch eine definierte chemische Zusammensetzung frei von irgendwelchen chemischen Trennmitteln auf. Hierdurch wird eine klebende Anbindung eines erfindungsgemäß hergestellten Faserverbundbauteils sehr erleichtert. Bis kurz vor dem Verkleben des erfindungsgemäß hergestellten Faserverbundbauteils kann die Vakuumfolie auf dem Faserverbundbauteil belassen werden, um dessen zu verklebende Oberfläche zu schützen.

Bei dem neuen Verfahren können auch externe Formvorrichtungen Verwendung finden, die mit ihren formgebenden Oberflächen die Raumform des hergestellten Faserverbundbauteils mitbestimmen. Diese Formvorrichtungen, die nicht Bestandteil des Faserverbundbauteils werden, werden dann aber immer außerhalb der Umhüllung angeordnet. Das heißt, sie kommen mit dem Kunststoff, insbesondere dem noch nicht ausgehärteten Kunststoff des Faserverbundbauteils, nicht in direkte Berührung, sondern ausschließlich mit der Vakuumfolie der Umhüllung der Vorform des Faserverbundbauteils in Kontakt. Entsprechend werden diese Formvorrichtungen weder durch den Kunststoff verunreinigt noch durch das Faserverbundbauteil abrasiv beansprucht. Entsprechend weisen sie eine extrem hohe Lebensdauer auf.

In einer ersten besonders bevorzugten Ausführungsform des neuen Verfahrens ist die externe Formvorrichtung ein Anschlussbauteil für das Hybridbauteil, wobei ein vorgesehener Anschlussbereich für das Hybridbauteil an das Anschlussbauteil die formgebende Oberfläche der externen Formvorrichtung ausbildet. Das heißt, bei dem erfindungsgemäßen Verfahren wird ein Faserverbundbauteil bei seiner Herstellung an ein zugehöriges Anschlussbauteil angeformt. Beim Aushärten des Kunststoffs des Faserverbundbauteils erfolgt aber noch keine Verbindung des Faserverbundbauteils mit dem Anschlussbauteil, indem sein Kunststoff dort anbindet. Es geht zunächst nur um eine geometrische Anpassung. Die endgültige Verbindung des erfindungsgemäß hergestellten Faserverbundbauteils und des Anschlussbauteils erfolgt erst in einem weiteren Schritt, nachdem die Umhüllung von dem erfindungsgemäß hergestellten Faserverbundbauteil entfernt wurde, dann beispielsweise durch Ankleben an das Anschlussbauteil.

Dies gilt selbst dann, wenn das Anschlussbauteil zeitgleich mit dem Hybridbauteil ausgehärtet wird, wobei das Anschlussbauteil auf einem Formwerkzeug angeordnet ist, dessen formsteife Oberfläche die Raumform des Anschlussbauteils vorgibt und damit über den Anschlussbereich für das Faserverbundbauteil auch dessen Raumform mitbestimmt. Auch bei gleichzeitiger Aushärtung des Kunststoffs des Anschlussbauteils und des Kunststoffs des Hybridbauteils entstehen zunächst zwei Teile, die erst anschließend nach dem Entfernen der jeweiligen Vakuumfolie insbesondere durch Verkleben miteinander verbunden werden.

Beim anschließenden Anbinden des erfindungsgemäß hergestellten Hybridbauteils in dem Anschlussbereich an das Anschlussbauteil kann zwischen dem Hybridbauteil und dem Anschlussbauteil ein Hohlraum verbleiben. Zur Realisation dieses Hohlraums bedarf es nach dem erfindungsgemäßen Verfahren keines Formkerns.

Um die Vorform für das Faserverbundbauteil mit ihrer Umhüllung an die formsteife Oberfläche einer externen Formvorrichtung anzudrücken, kann ein flächiger Zwischenbereich evakuiert werden, so dass der Umgebungsdruck den gewünschten Anpressdruck bereitstellt. Konkret kann in diesem flächigen Zwischenbereich eine luftleitende Schicht auf der Umhüllung, d. h. außerhalb der Umhüllung der Vorform des Faserverbundteils angeordnet werden.

Alternativ kann die Vorform mit ihrer Umhüllung mittels magnetischer Kräfte an die außerhalb der Umhüllung angeordnete formsteife Oberfläche angedrückt werden. Diese magnetischen Kräfte können auf den Metallkörper der Vorform einwirken, aber auch zwischen einem oder mehreren Magneten und der externen Formvorrichtung oder daran angebrachten zusätzlichen Magneten wirken.

Die Vorform kann mit ihrer Umhüllung auch mittels außerhalb der Umhüllung angeordneter diskreter Stützvorrichtungen an die außerhalb der Umhüllung angeordnete formsteife Oberfläche angedrückt werden. Auch diese Stützvorrichtungen stehen nicht in direktem Kontakt mit der Vorform des Faserverbundbauteils. Vielmehr ist immer die luftdichte Umhüllung der Vorform dazwischen angeordnet.

Die Vorform kann mit ihrer Umhüllung mit der außerhalb der Umhüllung angeordneten formsteifen Oberfläche auch in einem oder mehreren diskreten Bereichen ringförmig umschlossen werden, so dass eine diese formsteife Oberfläche aufweisende Formvorrichtung quasi selbst die Andrückkraft zum Andrücken der Vorform über die Umhüllung an die formsteife Oberfläche aufbringt.

In jedem Fall sind die externen Abstützungen der Vorform des erfindungsgemäß herzustellenden Faserverbundbauteils immer nur diskret, d. h. in voneinander beabstandeten Bereichen vorgesehen, damit im Wesentlichen der Differenzdruck über die Vakuumfolie der Umhüllung den Kunststoff mit den darin eingebetteten Verstärkungsfasern an den Metallkörper der Vorform andrückt.

Der bei dem erfindungsgemäßen Verfahren verwendete Metallkörper, der Bestandsteil des hergestellten Faserverbundbauteils wird, ist insbesondere ein kalt- oder warmverformtes Metallblech. Der Metallkörper kann zum Beispiel als Stahl, Aluminium, Titan oder einer Leichtmetalllegierung bestehen.

Die Verstärkungsfasern können als trockene Fasermaterialien oder als bereits vorimprägnierte Fasermaterialien in beliebiger, den gewünschten Eigenschaften des hergestellten Faserverbundbauteils entsprechender Orientierung eingesetzt werden, wobei trockene Fasermaterialien in der endgültigen Geometrie des Faserverbundbauteils mit dem Kunststoff infiltriert werden. Die Verstärkungsfasern können unidirektionale oder mehraxiale Gelege, mehraxiale Gewebe oder eine beliebige Kombination dieser aufweisen. Die Verstärkungsfasern können Kohlenstoff-, Glas-, Aramid-, Bor- oder Synthetikfasern umfassen.

Der Kunststoff kann ein kalt- oder warmhärtendes Harz sein.

Die externen Form- oder Stützvorrichtungen, die bei dem erfindungsgemäßen Verfahren eingesetzt werden, können aus Metall, Kunststoff oder faserverstärktem Kunststoff oder einer beliebigen Kombination aus diesen ausgebildet sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile von allen erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Die Erfindung wir im Folgenden anhand von Ausführungsbeispielen unter Bezugnahme auf die beigefügten Zeichnungen näher erläutert und beschrieben.
- **Fig. 1**: zeigt einen Querschnitt durch ein erfindungsgemäß in einer luftdichten Umhüllung hergestelltes Faserverbundbauteil.
- **Fig. 2**: zeigt ein Ausführungsbeispiel für das erfindungsgemäße Verfahren zur Herstellung eines Hybridbauteils und eines Anschlussbauteils, wobei ein Zwischenbereich evakuiert wird.
- **Fig. 3**: zeigt eine weitere Ausführungsform des erfindungsgemäßen Verfahrens zur Herstellung eines Hybridbauteils und eines Anschlussbauteils, wobei Magnete verwendet werden, um die beiden Bauteile aneinander zu fixieren.
- **Fig. 4**: zeigt eine weitere Ausführungsform des erfindungsgemäßen Verfahrens zur Herstellung eines Hybridbauteils und eines Anschlussbauteils, wobei eine Vorform des Hybridbauteils in diskreten Bereichen durch Stützvorrichtungen an eine Vorform des Anschlussbauteils angedrückt wird.
- **Fig. 5**: zeigt eine weitere Ausführungsform des erfindungsgemäßen Verfahrens zur Herstellung eines Hybridbauteils, wobei eine externe formgebende Oberfläche von einem Anschlussbauteil bereitgestellt wird und wobei ein Zwischenbereich evakuiert wird.
- **Fig. 6**: zeigt eine weitere Ausführungsform des erfindungsgemäßen Verfahrens zur Herstellung eines Hybridbauteils, wobei eine externe formgebende Oberfläche durch ein Anschlussbauteil für das Hybridbauteil bereitgestellt wird und wobei eine Vorform des Hybridbauteils an dem Anschlussbauteil durch Magnete fixiert ist.
- **Fig. 7**: zeigt eine weitere Ausführungsform des erfindungsgemäßen Verfahrens zur Herstellung eines Hybridbauteils, wobei eine externe formgebende Oberfläche von einem Anschlussbauteil für das Hybridbauteil bereitgestellt wird und wobei eine Vorform des Hybridbauteils in diskreten Bereichen durch Stützvorrichtungen an die externe formgebende Oberfläche angedrückt wird.
- **Fig. 8**: zeigt eine weitere Ausführungsform des erfindungsgemäßen Verfahrens zur Herstellung eines Hybridbauteils, wobei eine Vorform des Hybridbauteils in voneinander beabstandeten diskreten Bereichen von formgebenden formsteifen Oberflächen an Formvorrichtungen ringförmig umschlossen wird; und
- **Fig. 9**: ist eine vergrößerte Detailansicht von Fig. 8.

### FIGURENBESCHREIBUNG

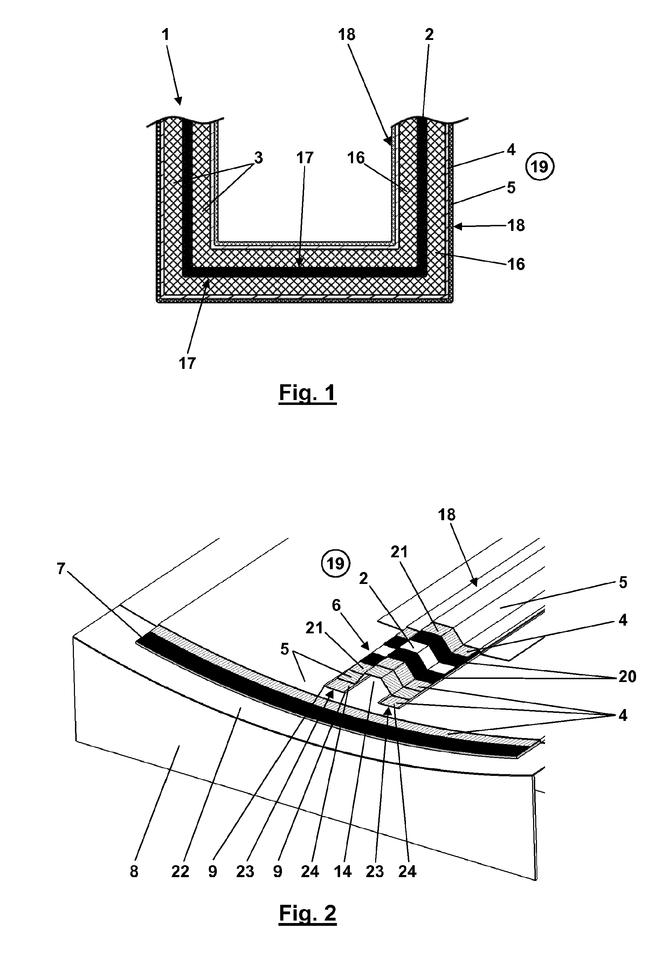

Das in **Fig. 1** gezeigte Hybridbauteil 1 weist eingebettet in eine Matrix aus Kunststoff 3 Verstärkungsfasern 16 und einen Metallkörper 2 auf. Der Metallkörper 2 liegt dabei mittensymmetrisch in dem Volumen des Hybridbauteils 1. Der Metallkörper 2 dient nicht nur dazu, gemeinsam mit der durch die Verstärkungsfasern 16 verstärkten Matrix aus Kunststoff 3 die gewünschten physikalischen Eigenschaften des Hybridbauteils 1 einzustellen. Vielmehr dient er zusätzlich bei der Herstellung des Hybridbauteils 1 als Formwerkzeug, indem er mit seinen formsteifen Oberflächen 17 die Raumform des Hybridbauteils 1 bei dessen Herstellung durch Aushärten des Kunststoffs 3 definiert. Die Oberflächen 17 des Metallkörpers 2 sind daher formgebende Oberflächen für das Hybridbauteil 1. Die Aushärtung des Kunststoffs 3 des Hybridbauteils 1 erfolgte in einer luftdichten Umhüllung 18. Die luftdichte Umhüllung 18 weist eine innere luftleitende Schicht 4 und außen eine Vakuumfolie 5 auf. Indem die Umhüllung 18 evakuiert wurde, lag während des Aushärtens des Kunststoffs 3 über die Umhüllung 18 der Umgebungsdruck 19 über die Vakuumfolie 5 an und drückte so den Kunststoff 3 mit den Verstärkungsfasern 16 an die formgebenden Oberflächen 17 an. Bei dem erfindungsgemäßen Verfahren zur Herstellung des Hybridbauteils 1 umschließt die Umhüllung 18 die Vorform des Hybridbauteils 1 allseitig. Das heißt, der Kunststoff 3 kommt beim Aushärten nicht mit irgendwelchen externen Formvorrichtungen in Berührung, die wiederholt verwendet werden sollen. Der formgebende Metallkörper 2, an den der Kunststoff 3 anbindet, wird in das Hybridbauteil 1 integriert. Die Herstellung des Hybridbauteils 1 kann auf trockenen oder vorimprägnierten Fasermaterialien basieren. Trockene Fasermaterialien werden nachträglich mit dem Kunststoff 3 infiltriert, wobei man vor dem Aushärten auch von Harz spricht, mit dem das Fasermaterial infiltriert wird. Vorimprägniertes Fasermaterial ist bereits vor dem Ausbilden der Vorform mit Harz infiltriert. Das Aushärten des Kunststoffs 3 kann bei dem erfindungsgemäßen Verfahren bereits bei Raumtemperatur oder bei erhöhter Temperatur duroplastisch oder auch durch Absenken der Temperatur, d. h. thermoplastisch erfolgen. Dabei kann der Umgebungsdruck 19 erhöht sein, indem das Aushärten in einem Autoklaven erfolgt.

**Fig. 2** zeigt eine Vorform 6 für die Ausbildung eines Hybridbauteils nach dem erfindungsgemäßen Verfahren, wobei die Vorform 6 den Metallkörper 2 zwischen Fasergelegen 20 umfasst. Die Fasergelege 20 können außer den Verstärkungsfasern 16 auch bereits den Kunststoff 3 (gemäß Fig. 1) aufweisen. Eingeschlossen ist die Vorform 6 in der Umhüllung 18 aus der inneren luftleitenden Schicht 4 in Form eines Abreißgewebes 21 und der darauf angeordneten Vakuumfolie 5. Neben der Vorform 6 für das Hybridbauteil ist in Fig. 2 eine zusätzliche Vorform 7 für die Herstellung eines Anschlussbauteils für das Hybridbauteil dargestellt. Die Vorform 7 ist auf einer formgebenden Oberfläche 22 eines Formwerkzeugs 8 angeordnet und mit einer luftleitenden Schicht 4 und einer Vakuumfolie 5 abgedeckt. Die Vakuumfolie 5 ist dabei gegenüber dem Formwerkzeug 8 abgedichtet. In vorgesehenen Anschlussbereichen 23 für das Hybridbauteil an dem Anschlussbauteil sind zwischen den Vakuumfolien 5 Zwischenbereiche 24 vorgesehen, in denen luftleitende Schichten 4 angeordnet sind. Durch Evakuieren der luftleitenden Schichten 4 in den Zwischenbereichen 24 drückt der Umgebungsdruck 19 die Vorform 6 in den Anschlussbereichen 23 an die Vorform 7 an. Dadurch wird sichergestellt, dass das Hybridbauteil und das Anschlussbauteil in den Anschlussbereichen 23 beim Aushärten ihres jeweiligen Kunststoffs komplementäre Formen annehmen. Bei dem erfindungsgemäßen Verfahren werden das Hybridbauteil und das Anschlussbauteil beim Aushärten ihrer Kunststoffe jedoch nicht unmittelbar miteinander verbunden, sondern zunächst getrennt hergestellt. Erst nach dem Entfernen der Umhüllung 18 von dem Hybridbauteil 1 und der Vakuumfolie 5 von dem Anschlussbauteil erfolgt dann beispielsweise ein Verkleben der beiden Bauteile.

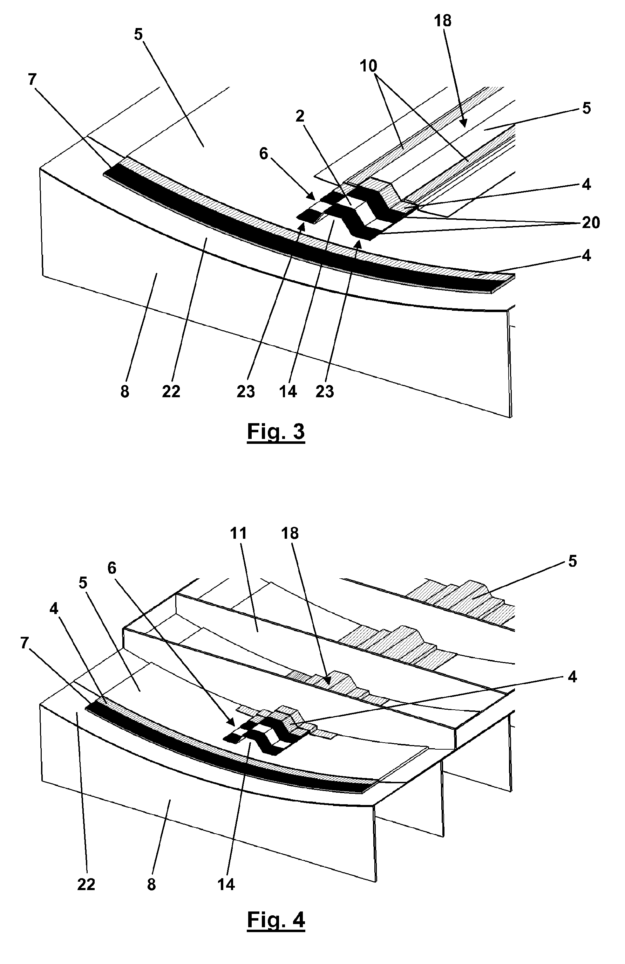

In **Fig. 3** ist die Verwendung von Magneten 10 zum Andrücken der Vorform 6 in den Anschlussbereichen 23 an die Vorform 7 skizziert. Entsprechend kann hier auf einen Zwischenbereich 24 mit einer luftleitenden Schicht 4 zwischen der Umhüllung 18 der Vorform 6 und der die Vorform 7 abdeckenden Vakuumfolie 5 verzichtet werden. Anders als in Fig. 3 unmittelbar ersichtlich ist aber die Umhüllung 18 um die Vorform 6 gegenüber einem Hohlraum 14, der später zwischen dem Hybridbauteil und dem Anschlussbauteil vorliegt, geschlossen.

**Fig. 4** skizziert den Einsatz von Stützvorrichtungen 11, um die Vorform 6 in diskreten Bereichen über ihre Umhüllung 18 gegen die Vorform 7 zu drücken. Auch hier ist anders als unmittelbar aus der Fig. 4 ersichtlich die Umhüllung 18 gegenüber dem Hohlraum 14 geschlossen.

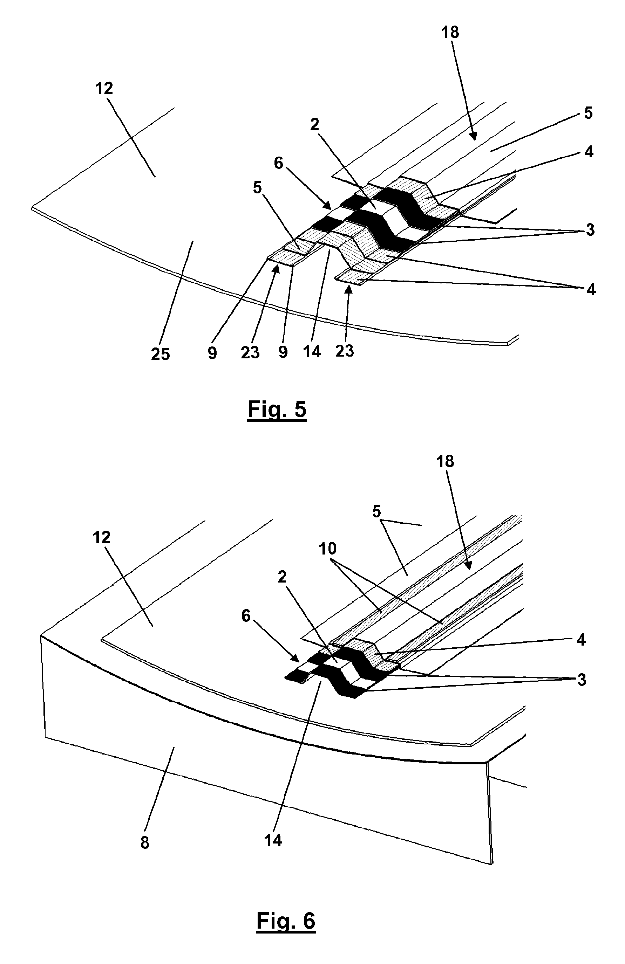

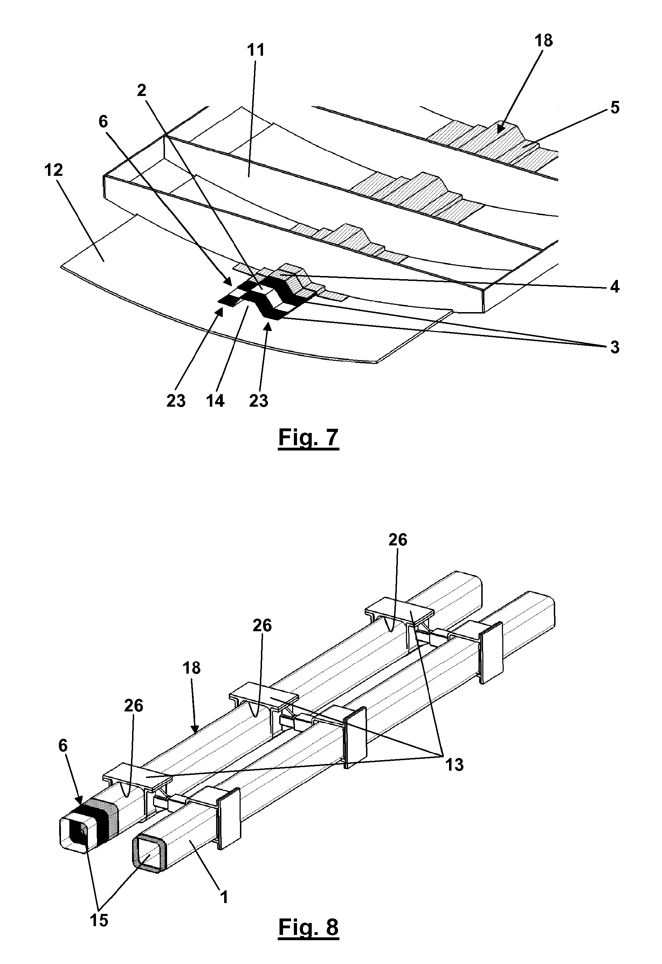

In den folgenden **Fig. 5 bis 7** sind Variationen der in den Fig. 2 bis 4 skizzierten Ausführungsformen des erfindungsgemäßen Verfahrens skizziert, bei denen das Anschlussbauteil 12 nicht gleichzeitig mit dem Hybridbauteil aus einer Vorform durch Aushärten deren Kunststoffs hergestellt wird, sondern bereits zuvor hergestellt wurde und so selbst eine externe formsteife formgebende Oberfläche 25 in den Anschlussbereichen 23 bereitstellt. Entsprechend ist das Anschlussbauteil 12 bei der Ausführungsform des erfindungsgemäßen Verfahrens gemäß den Fig. 5 bis 7 nicht mehr mit einer Vakuumfolie abgedeckt. Die Vorform 6 für das Hybridbauteil ist aber immer durch seine Umhüllung 18 vollständig gegenüber dem Anschlussbauteil 12 abgegrenzt. D. h. auch wenn dies aus den Fig. 6 und 7 nicht unmittelbar hervorgeht, ist die Umhüllung 18 auch gegenüber dem Hohlraum 14 und in jedem Fall in den Anschlussbereichen 23 gegenüber dem Anschlussbauteil 12 geschlossen. Anders gesagt liegt die formgebende Oberfläche 25 des Anschlussbauteils 12 nur über die Umhüllung 18 an der Vorform 16 an. Die in den Fig. 5 bis 7 skizzierten Maßnahmen zum Andrücken der Vorform 6 an die formgebende Oberfläche 25 entsprechen den in den Fig. 2 bis 4 skizzierten Maßnahmen zum Andrücken der Vorform 6 an die dortige Vorform 7.

Das bei den Ausführungsformen des erfindungsgemäßen Verfahrens gemäß den Fig. 2 bis 7 in den Anschlussbereichen 23 zwischen der Vorform 6 und der Vorform 7 bzw. dem Anschlussbauteil 12 angeordnete Material in Form mindestens einer luftleitenden Schicht und mindestens einer Vakuumfolie kann bezüglich seiner Dicke auf die Dicke einer Schicht aus Klebstoff abgestimmt werden, mit der das aus der Vorform 6 ausgebildete Hybridbauteil später an das Anschlussbauteil 12 angebunden wird.

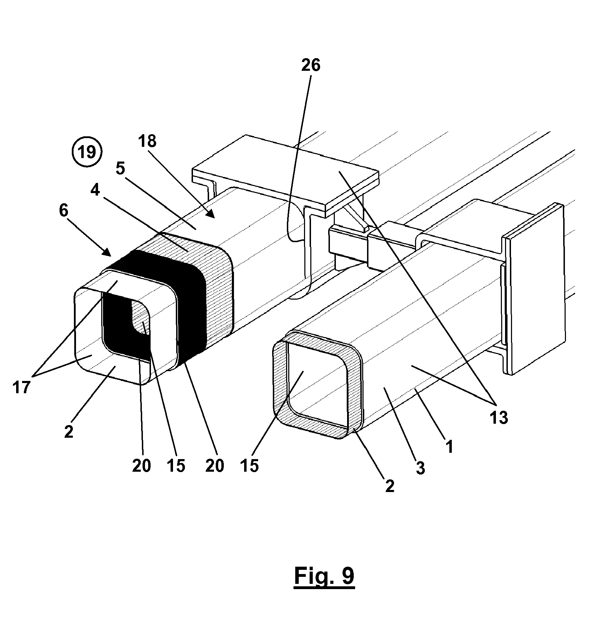

Die **Fig. 8** **und** **9** stellen die Herstellung eines Hybridbauteils in Form eines Hohlprofils dar. Dabei zeigen die Figuren jeweils rechts vorne das fertige Hybridbauteil 1 mit in die Matrix aus Kunststoff 3 eingebettetem Metallkörper 2 als Teil einer Formvorrichtung 13, die mit formgebenden Oberflächen 26, die die Umhüllung 18 der Vorform 6 in diskreten Bereichen ringförmig umschließen, zusammen mit dem Metallkörper 2 die Raumform des gewünschten Hybridbauteils beim Aushärten des Kunststoffs 3 definieren. Um den Hohlraum 15 im Inneren des gewünschten hohlprofilförmigen Hybridbauteils 1 herum verlaufen nacheinander zunächst eine Vakuumfolie 5, dann eine luftleitende Schicht 4, dann eine Schicht aus Fasergelege 20. Darum erstreckt sich der rohrförmige Metallkörper 2. Darauf ist wiederum eine Schicht aus Fasergelege 20 angeordnet. Die damit nach außen endende Vorform 6 ist durch eine luftleitende Schicht 4 und die äußere Vakuumfolie 5 abgedeckt. Beim Aushärten der Vorform 6 wirkt der Umgebungsdruck 19 nicht nur von außen, sondern auch innerhalb des Hohlraums 15 auf die Vakuumfolie 5 und drückt die Fasergelege 20 bzw. den dort hinein infiltrierten Kunststoff an die formgebenden Oberflächen 17 des Metallkörpers 2 an.

### BEZUGSZEICHENLISTE

- 1: Hybridbauteil
- 2: Metallkörper
- 3: Kunststoff
- 4: luftleitende Schicht
- 5: Vakuumfolie
- 6: Vorform
- 7: Vorform
- 8: Formwerkzeug
- 9: Dichtung
- 10: Magnet
- 11: Stützvorrichtung
- 12: Anschlussbauteil
- 13: Formvorrichtung
- 14: Hohlraum
- 15: Hohlraum
- 16: Verstärkungsfaser
- 17: Oberfläche
- 18: Umhüllung
- 19: Umgebungsdruck
- 20: Fasergelege
- 21: Abreißgewebe
- 22: Oberfläche
- 23: Anschlussbereich
- 24: Zwischenbereich
- 25: Oberfläche
- 26: Oberfläche

## Patentansprüche

1. Verfahren zur Herstellung von Hybridbauteilen (1) aus Kunststoff (3) mit Einlagen aus Verstärkungsfasern (16) und mindestens einem Metallkörper (2),
- wobei eine zumindest die Verstärkungsfasern (16) und den Metallkörper (2) umfassende Vorform (6) luftdicht in eine Umhüllung (18) eingeschlossen wird,
- wobei die Umhüllung (18) evakuiert wird,
- wobei die Verstärkungsfasern (16) mit dem Kunststoff (3) infiltriert werden und
- wobei der Kunststoff (3) unter Anbindung an den Metallkörper (2) ausgehärtet wird, wobei die Raumform des Hybridbauteils (1) mit formgebenden Oberflächen (17, 22, 25, 26) bestimmt wird, die mindestens eine formsteife Oberfläche (17) des mindestens einen Metallkörpers (2) umfassen,
**dadurch gekennzeichnet,**
- **dass** beim luftdichten Einschließen der Vorform (6) in die Umhüllung (18) die Vorform allseitig in eine innere luftleitende Schicht (4) und eine äußere Vakuumfolie (5) eingeschlossen wird.

2. Verfahren nach Anspruch 1, **dadurch gekennzeichnet, dass** der mindestens eine Metallkörper (2) bei der Ausbildung der Vorform (6) allseitig mit Verstärkungsfasern (16) belegt wird.

3. Verfahren nach Anspruch 1 oder 2, **dadurch gekennzeichnet, dass** die Vorform (6) allseitig in Abreißgewebe (21) eingeschlossen wird, das die luftleitende Schicht (4) der Umhüllung (18) ausbildet.

4. Verfahren nach einem der vorhergehenden Ansprüche, **dadurch gekennzeichnet, dass** die formgebenden Oberflächen (17, 22, 25, 26) mindestens eine formsteife Oberfläche (22, 26) einer außerhalb der Umhüllung (18) angeordneten Formvorrichtung (8, 12, 13) umfassen.

5. Verfahren nach Anspruch 4, **dadurch gekennzeichnet, dass** die Formvorrichtung ein Anschlussbauteil (12) für das Hybridbauteil (1) ist, wobei ein Anschlussbereich (23) für das Hybridbauteil (1) die formgebende Oberfläche (25) bildet.

6. Verfahren nach Anspruch 4, **dadurch gekennzeichnet, dass** die Formvorrichtung ein Formwerkzeug (8) für ein Anschlussbauteil (12) mit einem Anschlussbereich (23) für das Hybridbauteil (1) ist, wobei ein Kunststoff des Anschlussbauteils (12) zeitgleich mit dem Kunststoff (3) für das Hybridbauteil (1) ausgehärtet wird.

7. Verfahren nach Anspruch 5 oder 6, **dadurch gekennzeichnet, dass** nach dem Aushärten des Kunststoffs (3) die Umhüllung (18) von dem Hybridbauteil (1) entfernt und das Hybridbauteil (1) dann in dem Anschlussbereich (23) an das Anschlussbauteil (12) angebunden wird.

8. Verfahren nach Anspruch 7, **dadurch gekennzeichnet, dass** zwischen dem Hybridbauteil (1) und dem Anschlussbauteil (12) ein Hohlraum (14) verbleibt.

9. Verfahren nach einem der Ansprüche 4 bis 8, **dadurch gekennzeichnet, dass** die Vorform (6) mit ihrer Umhüllung (18) mittels eines evakuierten Zwischenbereichs (24) an die außerhalb der Umhüllung (18) angeordnete formsteife Oberfläche (22, 25) angedrückt wird.

10. Verfahren nach Anspruch 9, **dadurch gekennzeichnet, dass** in dem Zwischenbereich (24) eine luftleitende Schicht (4) zwischen der Umhüllung (18) und der formsteifen Oberfläche (22, 25) angeordnet wird.

11. Verfahren nach einem der Ansprüche 4 bis 8, **dadurch gekennzeichnet, dass** die Vorform (6) mit ihrer Umhüllung (18) mittels magnetischer Kräfte an die außerhalb der Umhüllung (18) angeordnete formsteife Oberfläche (22, 25) angedrückt wird.

12. Verfahren nach einem der Ansprüche 4 bis 8, **dadurch gekennzeichnet, dass** die Vorform (6) mit ihrer Umhüllung (18) mittels außerhalb der Umhüllung (18) angeordneter diskreter Stützvorrichtungen (11) an die außerhalb der Umhüllung (18) angeordnete formsteife Oberfläche (22, 25) angedrückt wird.

13. Verfahren nach Anspruch 4, **dadurch gekennzeichnet, dass** die Vorform (6) mit ihrer Umhüllung (18) von der außerhalb der Umhüllung (18) angeordneten formsteifen Oberfläche (26) in einem oder mehreren diskreten Bereichen ringförmig umschlossen wird.
